Europäisches Patentamt

European Patent Office

Office européen des brevets

(11) Publication number: **0 270 199**
**A2**

# (12) EUROPEAN PATENT APPLICATION

(21) Application number: **87305318.5**

(51) Int. Cl.⁴: **C09K 3/22**

(22) Date of filing: **16.06.87**

(30) Priority: **04.12.86 US 937674**

(43) Date of publication of application:
**08.06.88 Bulletin 88/23**

(84) Designated Contracting States:
**AT BE CH DE ES FR GB GR IT LI LU NL SE**

(71) Applicant: **Reed, Jeffrey Randolph**
**4093 Orchard Canyon Lane**
**Vacaville California 95688(US)**

Applicant: **Reed, Wendell Guilford**
**416 Buena Vista Drive**
**Modesto California 95354(US)**

(72) Inventor: **Reed, Jeffrey Randolph**
**4093 Orchard Canyon Lane**
**Vacaville California 95688(US)**
Inventor: **Reed, Wendell Guilford**
**416 Buena Vista Drive**
**Modesto California 95354(US)**

(74) Representative: **Barker, Rosemary Anne et al**
**Barlow, Gillett & Percival 94 Market Street**
**Manchester M1 1PJ(GB)**

(54) **Liquid composition controlling dust migration.**

(57) A liquid composition for controlling dust migration comprises an emulsion of 10 to 50% by volume liquid asphalt, 60 to 10% by volume of a lignosulfonic acid salt solution and 30 to 40% by volume water. The emulsion is pread on a dusty surface to penetrate the same before the emulsion breaks.

EP 0 270 199 A2

## LIQUID COMPOSITION CONTROLLING DUST MIGRATION

The present invention relates to a liquid composition for controlling or settling dust on a surface such as a roadway.

Many liquids have been employed in the past to prevent the raising of dust on paved roads by vehicles. For example, water, used motor oil, and various lignin sulfonates have been employed. Water, although successfully used to settle dust, is short lived since it easily evaporates in the presence of heat. Used motor oil generally contains contaminants which tend to pollute the water table adjacent to the road surface when used to control dust. Salts of lignosulfonic acid have also been employed to control dust migration on unpaved roadways. Although, the lignosulfonic acids salts bind the dust successfully they are easily washed away by rain.

A composition for semi permanently controlling the migration of dust would be a great advance in the field of transportation.

In accordance with the present invention a novel and useful liquid composition for controlling the migration of dust which is especially useful on dusty roads is provided.

The composition of the present invention utilizes three components to form an emulsion. The first component consists of a liquid asphalt which may be considered a slow curing product or a medium curing product under applicable transportation agency standards. The liquid asphalt may consist of a slow curing natural crude oil or slow curing residual oil from crude petroleum or a medium curing asphalt which is fluxed with kerosene. The slow curing products are preferred in certain cases where kerosene is deemed an undesirable component. Slow and medium curing liquid asphalts may be rated as having kinematic viscosities ranging from 70-6000 stokes at 140°F (60°C). Such liquid asphalt products are normally sold under the designation S.C. (slow curing) and M.C. (medium curing) followed by a number denoting the low end value of the kinematic viscosity. For example, S.C.-70 is a slow curing liquid asphalt having a kinematic viscosity of generally 70-140 under the AASHTO (American Association of State Highway Transportation Officials) T 201 test method.

The second component is a salt of lignosulfonic acid which originates with wood and is obtained therefrom during the paper manufacturing process. Such a salt may be found as sodium and ammonium lignin sulfonate and are sold under the trademark 'ÓRZAN' A, S, G, or LS by Crown Zellback Corporation Chemical PRoducts Division, Camas, Washington. Gnerally, the sodium and ammonium lignin sulfonate is formed into a 50% by weight solution with water to form a liquid concentrate. Salts of lignosulfonic acids are very soluble in water and fairly inexpensive in comparison with the asphaltic products heretofore described.

Liquid asphalt and the salt solution of the lignosulfonic acid may be mixed with water the third component, to form an emulsion by employing an emulsifier or emulsion mill. Specifically, the emulsion is formed by mixing 10 to 50% of the asphalt liquid with 60 to 10% of a solution of the lignosulfonic acid salt and water in a 50-50 proportion by weight. Also, the additional water is added ranging from 30 to 40%. The percentages of the three components above identified are on a volume basis. The liquid asphalt component is heated to 250°F (121°C) while the remaining components are fed to the mixture at about 100°F (38°C). The resultant mixture passes to a colloid emulsion mill such as a Charlotte model G125 colloid mill manufactured by Chemicolloid Laboratories Inc. of Garden City Park, New York. It is believed that the emulsion particles formed are three to five microns in size. The resulting emulsion may be considered a 'slow' setting type of emulsion. That is, a substantial period of time is required for the emulsion to 'break' or disappear. The emulsion may be stored for several days without reagitation. For ready use the temperature of the emulsion is maintained at a minimum of to approximately 120°F (49°C).

Application of the emulsion is achieved by transporting the emulsion to the source of the dust, such as a dusty road. The road surface is initially dampened with water followed by distribution of the emulsion on the surface of the road by a conventional spreader apparatus. It has been found that an emulsion employing a 30% by volume portion of the asphaltic liquid in the form of S.C.-70 may be distributed between two tenths of a gallan to thirty five hundreths of a gallon per square yard (approx. 1.08 to 1.93 litres per sq. m.). It should be noted that this concentration is substantially less than is required for motor oil in the prior art. The surface may be employed for vehicular use following treatment with the emulsion within two to twenty four hours, depending on the rate of evaporation of the water from the emulsion.

It is believed that another advantage of forming an emulsion of the heretofore described components pemits the liquid asphalt component to greatly penetrate the surface of the roadway. Normally, the application of a liquid asphalt component on a dusty surface would result in such component 'plating-out'. That is, the liquid asphalt component would spread across the surface of the dusty road with very little penetration. After the emulsion of the present invnetion is employed to bind dust, evaporation of the water causes the emulsion to 'break' or loose its state of emulsion. In general, the lignosulfonic acid salt component travels to a lower level relative to the surface of a dusty road and is protected against moisture by the overlying asphaltic liquid layer. In other word, the normally water soluble component lies below the water repenllant layer after the emulsion 'breaks'. Thus, the liquid composition of the present invention is unusually resistant to rainwater deterioration.

The invention is further illustrated by the following examples.

Example 1

An 8000 gallon (36400 litres) mixture was formed utilizing a liquid asphalt as a petroleum hydrocarbon purchased under the trademark 'SC-70', liquid water, and a liquid solution of ammonium and sodium lignin sulfonate in water purchased under the trademark 'ORZAN-50' manufactured by the Crown Zellback Chemical Products Division. The volume percentages and temperatures fo the mixture were determined to be as follows.

| Component | Temp $^O$F | Vol.Percentage |
|---|---|---|
| Liquid Asphalt (Specific Gravity .89-.99) | 250 (121$^O$C) | 30% |
| Water | 100 (38$^O$C) | 30% |
| Solution of 50% ammonium and sodium lignin sulfonate and 50% water by weight (Specific Gravity 1.23-1.28 at 77$^O$C) | 100 (38$^O$C) | 40% |

The above mixture was passed through an emulsification mill to form an emulsion at a temperature of at about 160°F (71°C) during a (1) hour period. The emulsion was transferred to a 12,000 gallon (54600 litre) heated tank and stored for (5) days at about 150°F (65.5°C) After a brief circulation within the storage tank the emulsion was observed to be in-tact.

Example 2

The process of Example 1 was repeated with the same mixture components as those enumerated therein except that the following volume percentages and temperatures of the mixture were determined to be as follows:

| Component | Temp °F | Vol. Percentage |
|---|---|---|
| Liquid Asphalt | 250 (121°C) | 10% |
| Water | 100 (38°C) | 30% |
| Solution of 50% Ammonium and Sodium Lignin Sulfonate and 50% water, by weight | 100 (38°C) | 60% |

Example 3

The process of Example 1 was repeated with the mixture components as those enumerated in Example 1, except that the following volume percentages and temperatures of the mixture were determined to be as follows:

| Component | Temp °F | Vol. Percentage |
|---|---|---|
| Liquid Asphalt | 250 (121°C) | 50% |
| Water | 100 (38°C) | 30% |
| Solution of 50% Ammonium and Sodium Lignin Sulfonate and 50% water by weight | 100 (38°C) | 20% |

Example 4

An 8000 gallon (36400 litre) mixture is formed utilizing a liquid petroleum hydrocarbon (Medium Cure Product) purchased under the trademark 'MC-70', liquid water, and a 50-50% liquid solution, by weight, of ammonium sodium lignin sulfonate and water. The liquid solution is pruchased under the trademark 'ORZAN-50' and manufactured by the Crown Zellerback Chemical Products Division. The volume percentages and temperatures of the mixture are determined to be as follows:

4

| Component | Temp $^\circ$F | — Vol. Percentage |
|---|---|---|
| Liquid Asphalt | 250 (121$^\circ$C) | 30% |
| Water | 100 (38$^\circ$C) | 30% |
| Solution of 50% ammonium and sodium lignin sulfonate and 50% water (Specific gravity 1.23-1.28 at 77$^\circ$C) | 100 (38$^\circ$C) | 40% |

Example 5

The emulsion of Example 1 was formed and transferred to a 12,000 gallon (54600 litre) storage tank. The emulsion was then pumped within 48 hours to an oil distributor truck with a 14 foot (4.25m) spray bar mounted on the rear end thereof. The emulsion was sprayed on a dusty improved road which had been dampened at a concentration range of about 0.2 gal/yd2 to 0.35 gal/yd2 (approx 1.08 to 1.93 litres per sq. m). After evaporation of the water of the emulsion the road appeared darkened and was substantially dust free. A cross-section of the road was examined several days later. It was determined that the emulsion state had disappeared and that the lignosulfonic acid salt had penetrated the unpaved road to a depth of approximately 1/2-3/4 of an inch (1.27 to 1.91 cm). The liquid asphalt penetrated the unpaved road surface only to a depth of approximately 1/4" (0.64 cm). About (60) days after application of the emulsion and exposure of the unpaved road to several inches of rain, the dry unpaved road was reinspected. Again, the unpaved road appeared darkened and substantially dust free.

**Claims**

1. A liquid composition for controlling dust migration comprising an emulsion of, from 10-50% by volume of a liquid asphalt, from 60-10% by volume of a solution of 50% by weight of a lignosulfonic acid salt and 50% by weight of water, and from 30-40% by volume of water.

2. A liquid composition according to claim 1 in which the lignosulfonic acid salt comprises ammonium lignin sulfonate and/or sodium lignin sulfonate.

3. A liquid composition according to claim 1 or 2 in which the liquid asphalt comprises a slow curing natural crude oil and/or a slow curing residual oil from crude petroleum, each possessing a kinematic viscosity ranging from 70 to 6000 stokes at 140°F (60°C).

4. A liquid composition according to claim 1 or 2 in which the liquid asphalt comprises a medium curing asphalt product blended with kerosene and possessing a kinematic viscosity ranging from 70 to 6000 stokes at 140°F (60°C).

5. A liquid composition for controlling dust migration comprising an emulsion of from 28-32% by volume of a liquid asphalt, from 45-35% by volume of a solution of 50% by weight of a lignosulfonic acid salt and 50% by weight of water, and 27-22% by volume of water.

6. A liquid composition for controlling dust migration comprising an emulsion of 30% by volume of a liquid asphalt, 40% by volume of a solution of 50% by weight of a lignin sulfonic acid salt and 50% by weight of water, and 30% by volume of water.

7. A method of preventing the migration of dust comprising the steps of:

a. providing a liquid emulsion of from 10-50% by volume of a liquid asphalt, from 60-10% by volume of a solution of 50% by weight of a lignosulfonic acid salt and 50% by weight of water, and from 30-40% by volume of water and

b. spreading the liquid emulsion on the dust.

5